(19)

Europäisches
Patentamt
European
Patent Office
Office européen
des brevets

(11) **EP 3 343 313 A1**

(12) **EUROPEAN PATENT APPLICATION**

(43) Date of publication:
**04.07.2018 Bulletin 2018/27**

(51) Int Cl.:
***G06F 1/20*** *(2006.01)*          ***G06F 1/32*** *(2006.01)*

(21) Application number: **16207548.5**

(22) Date of filing: **30.12.2016**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Intel IP Corporation
Santa Clara, CA 95054 (US)**

</td><td>

(72) Inventor: **KOCAGOEZ, Kenan
90491 Nürnberg (DE)**

(74) Representative: **Viering, Jentschura & Partner mbB
Patent- und Rechtsanwälte
Am Brauhaus 8
01099 Dresden (DE)**

Remarks:
Amended claims in accordance with Rule 137(2) EPC.

</td></tr>
</table>

(54) **DEVICES AND METHODS FOR THERMAL MANAGEMENT**

(57)    A device and method for configuring a thermal management component of a device having a chip installed in the device, including installing a thermal information comprising a plurality of classes into the device, wherein each of the plurality of classes comprises a predetermined post-production measurement range and one or more predetermined thermal parameters associated with the predetermined post-production measurement range; determining a characteristic of the chip; classifying the chip into a respective class from the plurality of classes based on the determined characteristic of the chip; determining one or more predetermined thermal parameters of the respective class; and configuring a thermal management component of the device according to the one or more determined predetermined thermal parameters.

FIG. 1

EP 3 343 313 A1

**Description**

**Technical Field**

Various aspects of this disclosure relate generally to methods and devices for thermal management in System on Chip devices.

**Background**

Ongoing competition in next generation devices, e.g. wireless communication devices, will push future System on Chip (SoC) development to further shrink process technology in order to achieve smaller chip and package size. This ongoing scaling down of complementary metal-oxide-semiconductor (CMOS) by increasing the density of transistors over a minimizing chip area is governed by Moore's Law. Proper thermal management of these chips remains a key technological hurdle, especially for wireless handheld products which are not subject to an active cooling system. Such devices, e.g. mobile phones, will suffer on the more restricting boundaries imposed by these thermal constraints. In order for new wireless communication SoCs, from wearables to handheld devices, to maximize efficacy, they will need proper thermal management systems that monitor the temperature of the chip and triggers throttling measures or notifies a base station about thermal issues. However, as semiconductor nodes on CMOS chips have been scaled below 10 nm, specific process variations between chips will become more readily apparent. These process variations will result in different physical and thermal characteristics across the chip production process window. Therefore, current thermal management methods result in ineffective implementation of thermal throttling, shutdown mechanisms, etc. in devices which are near a process window edge.

**Brief Description of the Drawings**

In the drawings, like reference characters generally refer to the same parts throughout the different views. The drawings are not necessarily to scale, emphasis instead generally being placed upon illustrating the principles of the invention. In the following description, various aspects of the invention are described with reference to the following drawings, in which:

FIG. **1** shows a mechanism to provide a device thermal management and/or device frequency correction;
FIG. **2** shows a cumulative distribution function (CDF) leakage profile;
FIG. **3** shows on overall concept diagram;
FIG. **4** shows a series of two graphs for detecting the runaway temperature;
FIG. **5** shows graph showing the relationship between thermal runaway temperatures to measured leakage powers;
FIG. **6** shows a graph for the expected maximum temperature gradient;
FIG. **7** shows an internal configuration for a user equipment;
FIG. **8** shows a configuration for a SoC in an aspect of this disclosure;
FIG. **9** shows a network;
FIG. **10** shows a thermal management component in an aspect of this disclosure;
FIG. **11** shows a flowchart describing a thermal management method in an aspect of this disclosure; and
FIG. **12** shows a series of graphs illustrating exemplary results of the performance management methods of this disclosure.

**Description**

The following details description refers to the accompanying drawings that show, by way of illustration, specific details and aspects in which the invention may be practiced.

The word "exemplary" is used herein to mean "serving as an example, instance, or illustration". Any aspect or design described herein as "exemplary" is not necessarily to be construed as preferred or advantageous over other aspects or designs.

The words "plural" and "multiple" in the description and the claims, if any, are used to expressly refer to a quantity greater than one. Accordingly, any phrases explicitly invoking the aforementioned words (e.g. "a plurality of [objects]", "multiple [objects]") referring to a quantity of objects is intended to expressly refer more than one of the said objects. The terms "group", "set", "collection", "series", "sequence", "grouping", "selection", etc., and the like in the description and in the claims, if any, are used to refer to a quantity equal to or greater than one, i.e. one or more. Accordingly, the phrases "a group of [objects]", "a set of [objects]", "a collection of [objects]", "a series of [objects]", "a sequence of [objects]", "a grouping of [objects]", "a selection of [objects]", "[object] group", "[object] set", "[object] collection", "[object] series", "[object] sequence", "[object] grouping", "[object] selection", etc., used herein in relation to a quantity of objects is intended to refer to a quantity of one or more of said objects. It is appreciated that unless directly referred to with an explicitly stated plural quantity (e.g. "two [objects]" "three of the [objects]", "ten or more [objects]", "at least four [objects]", etc.) or express use of the words "plural", "multiple", or similar phrases, references to quantities of objects are intended to refer to one or more of said objects.

A "circuit" as used herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions which will be described below in further detail may also be understood as a "circuit". It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit. The term "circuit arrangement" may refer to a single circuit, a collection of circuits, and/or an electronic device composed of one or more circuits.

A "processing circuit" (or equivalently "processing circuitry" or "processer") as used herein is understood as referring to any circuit that performs an operation(s) on signal(s), such as e.g. any circuit that performs processing on an electrical signal or an optical signal. A processing circuit may thus refer to any analog or digital circuitry that alters a characteristic or property of an electrical or optical signal, which may include analog and/or digital data. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (e.g. a processor or microprocessor). As utilized herein, "digital processing circuit(ry)" may refer to a circuit implemented using digital logic that performs processing on a signal, e.g. an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single processing circuit may be equivalently split into two separate processing circuits, and conversely that two separate processing circuits may be combined into a single equivalent processing circuit.

As used herein, "memory" may be understood as an electrical component in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the "term" memory. It is appreciated that a single component referred to as "memory" or "a memory" may be composed of more than one different type of memory, and thus may refer to a collective component comprising one or more types of memory. It is readily understood that any single memory "component" may be distributed or/separated multiple substantially equivalent memory components, and vice versa. Furthermore, it is appreciated that while "memory" may be depicted, such as in the drawings, as separate from one or more other components, it is understood that memory may be integrated within another component, such as on a common integrated chip.

The term "network" as utilized herein, e.g. in reference to a communication network such as a mobile communication network, is intended to encompass both an access component of a network (e.g. a radio access network (RAN) component) and a core component of a network (e.g. a core network component).

For purposes of this disclosure, radio communication technologies may be classified as one of a Short Range radio communication technology, Metropolitan Area System radio communication technology, or Cellular Wide Area radio communication technology. Short Range radio communication technologies include Bluetooth, WLAN (e.g. according to any IEEE 802.11 standard), and other similar radio communication technologies. Metropolitan Area System radio communication technologies include Worldwide Interoperability for Microwave Access (WiMax) (e.g. according to an IEEE 802.16 radio communication standard, e.g. WiMax fixed or WiMax mobile) and other similar radio communication technologies. Cellular Wide Area radio communication technologies include Global System for Mobile Communications (GSM), Code Division Multiple Access 2000 (CDMA2000), Universal Mobile Telecommunications System (UMTS), Long Term Evolution (LTE), General Packet Radio Service (GPRS), Evolution-Data Optimized (EV-DO), Enhanced Data Rates for GSM Evolution (EDGE), High Speed Packet Access (HSPA), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies. It is understood that exemplary scenarios detailed herein are demonstrative in nature, and accordingly may be similarly applied to various other mobile communication technologies, both existing and not yet formulated, particularly in cases where such mobile communication technologies share similar features as disclosed regarding the following examples.

Unless explicitly specified, the term "transmit" encompasses both direct (point-to-point) and indirect transmission (via one or more intermediary points). Similarly, the term "receive" encompasses both direct and indirect reception. The term "communicate" encompasses one or both of transmitting and receiving, i.e. unidirectional or bidirectional communication in one or both of the incoming and outgoing directions. The term "calculate" encompass both 'direct' calculations via a mathematical expression/formula/relationship and 'indirect' calculations via lookup tables and other array indexing or searching operations.

The thermal management devices and methods of this disclosure tailors the thermal management component of each terminal device (e.g. handset device, wearable, etc.) by optimizing a SoC thermal management scheme to deal with highly volatile process variations present on each chip fabrication node. The thermal management schemes of this disclosure distinguish the variations incurred during the fabrication production phase where the physical characteristics of a SoC vary from die to die.

Shrinking transistor size (lengths, widths, oxide thickness) have led to higher power leakage in chips. While standard thermal management schemes may account for the higher leakage powers (which will continue to increase as chip size decreases), the standard thermal management schemes fail to consider high variations in the leakage levels across the production process window. Simulation data predicts that such process related variations will become more apparent with CMOS technology continuing to shrink to process nodes below 10 nm.

If not properly accounted for, these process variations will lead to a changed user perception from terminal device to terminal device, even though the terminal devices are intended to operate in a substantially uniform manner. Current thermal management methods will fail to achieve a harmonized device performance over the entire range of the production process window. The ensuing devices and methods consider these issues and implement efficient solutions to optimize the thermal management scheme on a per part/device basis considering variations across the production process window.

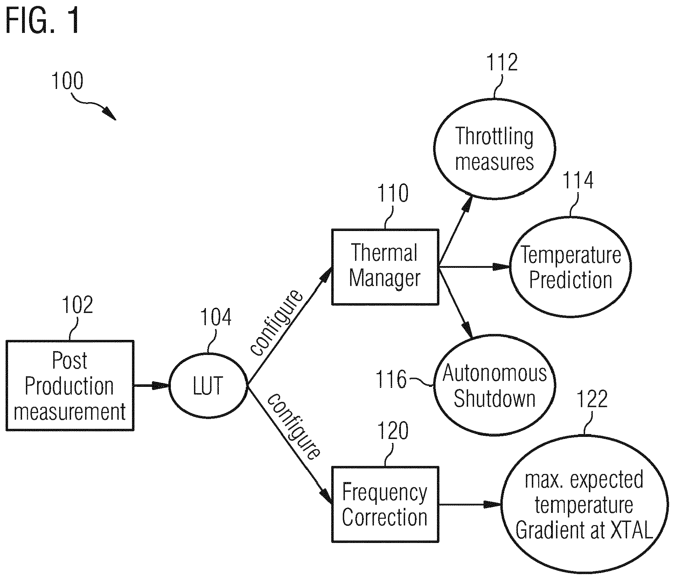

FIG. **1** shows a diagram **100** to provide a device thermal management and/or device frequency correction. It is appreciated that diagram **100** is exemplary in nature and may thus be simplified for purposes of this explanation.

In an aspect of this disclosure, thermal management methods are adapted on a device-specific basis by accounting for varying processing characteristics that are pertinent for thermal behavior. These characteristics are those which if not handled properly, may alter device performance between devices of the same product.

In order to implement these methods, post-production measurements **102** of each device (i.e. chip, chip package, etc.) are obtained. These measurements may be described as general measurements which provide for physical and/or electrical characteristics of the chips, e.g. silicon chips. Examples of such measurements may include, but are not limited to: Iddq, Idv, and/or System Monitor (SMON) testing.

The post-production measurements of this disclosure are generally any set of measurements conducted for a silicon chip which provide the chip's thermal and/or physical characteristics. For example, Iddq/Idv testing may be used as a simple and fast wafer test for detecting physical defects during fabrication of the CMOS integrated circuits. Here, the supply current (Idd) is measure in quiescent state (q), i.e. when the circuit is not switching but power rails have been applied with a respective supply voltage. The measured current in this state is due to leakage flow. Accordingly, the leakage power of each chip may be obtained. In a similar manner, wafer tests which measure silicon speed can be used, e.g. SpeedMonitor (SMON). Such post production characterization serves primarily as a transistor speed test to determine voltage levels required for chip frequency, and thus, may classify the chips into different speed classes. The determined speed class directly correlates with the physical leakage characteristics, i.e. the higher the speed class, the higher the leakage power level. Another exemplary option is to utilize post-production process corner classifications and assign each classification the appropriate thermal parameter values.

The results from the post production measurements are stored and used to load a thermal profile from a Look Up Table (LUT) **104** to set the device-specific performance management scheme for a thermal manager **110** to optimize thermal throttling **112**, temperature prediction **114**, and autonomous device shutdown measures **116** as well as frequency correction mechanisms **120,** such as the automatic frequency correction (AFC) mechanism, i.e. in the cellular device case. A thermal profile may contain information of a chip's expected temperature response (e.g. when run-away temperature is triggered) based on the current used. In other words, once the leakage power of each chip has been determined, the terminal device may load the appropriate thermal parameters associated with the chip's leakage power in order to more properly manage the chip's (and therefore the terminal device's) specific thermal behavior. For example, for a particular leakage power class, the following temperature levels may be learned and loaded into the LUT: 125 °C for autonomous shutdown, 115 °C for software shutdown, 110 °C throttling for the upper band, and 90 °C throttling for the lower band.

Autonomous shutdown **116**, thermal throttling measures **112**, as well as temperature prediction **114,** and sensor sensing schemes may also be calibrated by the results obtained in the post-production measurements **102**. These methods optimize thermal handling over the entire process window of fabrication nodes by achieving more harmonized device capabilities/performance across the entire range of product samples. Furthermore, the obtained information is utilized to calibrate AFC mechanism **120** on maximum expected temperature gradients **122**.

The AFC mechanism **120** can be calibrated on a device specific basis. In the case of a user equipment (UE), the Global Navigation Satellite System (GNSS) and the radio access technology (RAT) specific AFC algorithms are calibrated during device boot up with an initial indication of the maximum temperature gradient **122** that is expected based on the post production measurements of a particular device. For example, if the post-production measurements provide an indication that the temperature gradient is no more than 2 K/s at the sensitive frequency oscillator position on the printed circuit board (PCB), the AFC filters and filtering periods can be extended to be more robust under low signal to noise ratio (SNR) scenarios. Similarly, if the post-production measurements indicate that the temperature gradients of the specific chip may be up to 10 K/s, the AFC algorithms may be tuned in advance to account for such a gradient, reducing synchronization losses with the radio network during device operation.

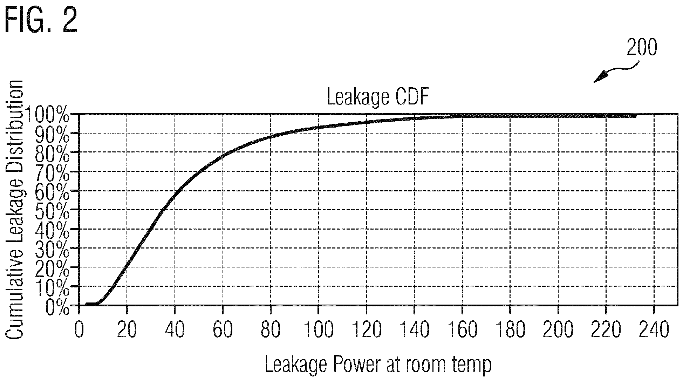

FIG. **2** shows a graph **200** depicting a cumulative leakage distribution for a CMOS chip with a 10 nm node class or smaller. It is appreciated that graph **200** is exemplary in nature and may thus be simplified for purposes of this explanation.

Physical transistor attributes alter the leakage levels of the individual fabricated chips such that performance is impacted and may change per device. Until recently, the thermal problem identified in this disclosure was negligible as SoC leakage levels were comparatively low, e.g. <15 mW leakage power at room temperature versus a 1 W dynamic/active power level. Furthermore, the observed process variation of the chips was well below a factor of three. In such an environment, only a low percentage of chips were rated as "inadequate," i.e. outside the three-sigma distribution. These chips were then simply screened from production, having little impact on the overall yield. The thermal manager of the devices with these chips is centered to optimally work for a single process corner, configuring all internal algorithms and thresholds on a single and predetermined leakage level.

However, this variation trend will rise above a factor of three and the leakage power levels will continue to increase exponentially as the process nodes on transistors continue to decrease in size. Graph **200** illustrates this problem. Leakage power levels (in mW) are on the x-axis, assuming a typical corner (TT) SoC leakage power of 36 mW at room temperature and a five-fold variation between TT and the fast process corner (FF). The y-axis shows the cumulative leakage distribution as a function of the leakage power. In graph **200**, a leakage power of 175 mW at the FF corner is still within the three-sigma band.

As demonstrated by graph **200**, a specific SoC may be fabricated with, for example, a maximum leakage power of only 20mW, whereas the next SoC from the production line may dissipate 100 mW of leakage power. As a result, the physical characteristics between these similar SoC designs will widely differ. Avoiding these differences by simply screening out the "bad" samples will no longer be practical due to cost reasons. Instead, the thermal management devices and methods of this disclosure provide solutions to handle such variations while maintaining performance harmonization across a wide range of the device production window. In other words, the methods and devices of this disclosure provide solutions to the increasing levels of leakage power and variation between devices as advances in technology continue to decrease the size of SoCs so that the overall yield of the products is not affected while maintaining consistent device performance.

Accordingly, in an aspect of this disclosure, a post-production thermal management calibration is implemented, including utilizing post-production measurements for device thermal management including: configuring throttling measures per each device; parametrizing temperature slop detection and tracking algorithms; estimating maximum temperature gradient to adapt temperature sensors sensing period and adapt AFC algorithms; reconfiguring of software shutdown levels; more accurately estimating individual device thermal run away trigger levels and utilize this determination in device thermal manager throttling and shutdown measure; and/or adapt autonomous device shutdown temperature(s).

In sum, the disclosure herein provides a per part/device calibration (i.e. for every individual SoC) to adapt a terminal device (e.g. UE) thermal manager to work optimally on each process corner, such as, for example, slow-slow, fast-fast, fast-slow, slow-fast and typical-typical process corners, i.e. so that the full three-sigma distribution (i.e. 99.7%) is covered. This results in an improvement over the standard approach which is typically designed for a single specific process corner.

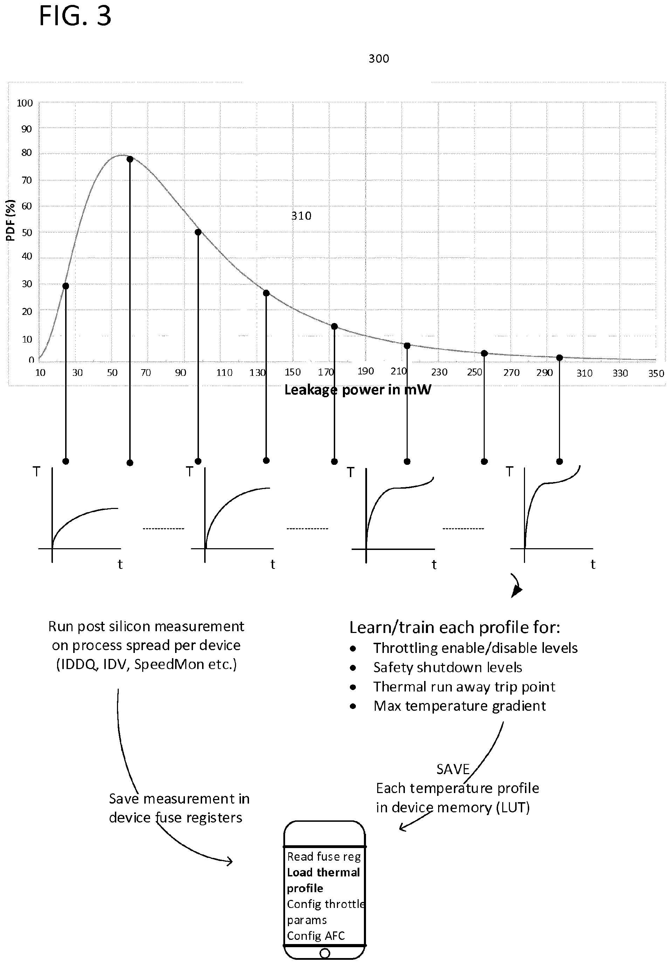

FIG. **3** shows an overall concept diagram **300** in an aspect of this disclosure. It is appreciated that diagram **300** is exemplary in nature and may thus be simplified for purposes of this explanation. For purposes of this explanation, the manufactured device of interest is an SoC and the post-production measurement is a leakage power measurement, although it is appreciated that other devices (e.g. other devices with transistors) and post-production measurements (e.g. transistor speed) are encompassed in this disclosure

The probability density function (PDF) **310** of the power leakage of each SoC as a function of the leakage power (in mW) is shown at the top of diagram **300**. The wide range of the different leakage levels across the production window may be attributed to the process spread for SoCs with transistor nodes at 10 nm or below.

At an initial stage, the thermal profiles for N leakage power levels is constructed, where N is any integer greater than 1. The leakage power levels can be characterized upon chip individual physical and electrical behavior/performance. For example, in diagram **310**, eight leakage power levels are selected (the eight points along the PDF curve) and a thermal profile for each of these leakage power levels is constructed (four of which are shown) **320**. In this manner, a thermal profile is provided for a certain leakage power class covering a range of leakage power levels under which each chip of the entire production window falls within. As can be seen from the PDF graph at the top of diagram **300**, most of the SoCs will fall within either the second, third, or first leakage power level classifications, and thereby, be associated with that leakage power level classification's respective thermal profile. As demonstrated by diagram **300**, the thermal profiles at higher leakage power levels may be distorted by the process spread. Accordingly, the SoCs demonstrating these leakage power levels (i.e. higher leakage power classification) would need significantly different thermal management parameters than the chips with low leakage power levels (i.e. lower leakage power classification) in order to maintain the same level of performance.

It is appreciated that any number leakage power levels may be selected in which to save the associated thermal profile, dependent on the PDF in order to account for the portion of the production window which is deemed to be economically viable.

Next, each leakage power class's respective parameters are determined. These parameters may include throttling enable/disable levels, safety shutdown levels, thermal runaway trip point, and/or maximum temperature gradient levels are determined for each thermal profile. Each leakage power class (i.e. thermal profile), along with its parameters, is then stored in a Look Up Table (LUT), which is loaded into a memory component of each terminal device's (e.g. UE).

After obtaining the thermal profiles (and their associated parameters) for each of the selected leakage power classes across the process window, post silicon measurements are run for each individual SoC in order to determine the leakage power class of the SoC. These post silicon measurements may include, but is not limited to, Iddq, Idv, and/or SpeedMon testing. These measurements, which may include the leakage power level of the device at room temperature, are saved to the device fuse registers. The fuse registers are bytes of permanent (i.e. are retained if power is turned off, but may be reset) storage that determine chip function, e.g. speed and voltage.

Once the SoC is installed into the terminal device (e.g. the UE), the post silicon measurement results are read from the SoC fuse registers and the respective thermal profile is loaded from the LUT in order to configure the thermal management parameters (e.g. throttling measure, temperature prediction, and/or autonomous shutdown) and/or AFC manager (e.g. the maximum expected temperature gradient of the frequency control crystal) specific to the SoC characteristics.

By implementing the process described in diagram **300**, the overall yield is improved since SoC may be specifically tailored in order to maintain consistent performance across a wide range of SoCs with differing physical and electrical characteristics.

Current methods use a specific point of the production process window to determine the thermal management entities of all the SoCs of the production process window. However, the farther away a particular SoC is away from this specific point, the higher the probability the thermal control loop will fail to enable the throttling on time, or, in the worst case, the higher the chance of crossing the thermal runaway temperature too early since the control loop responses will not match the shifted temperature characteristics of the particular SoC. SoCs populating the mid-to-far edges of the process window will have to be discarded in increasing numbers since SoC's exhibiting thermal instability cannot be implemented into products to be sold to customers. As transistor sizes keep decreasing, currently implemented processes (using a specific point of the production window) will fail to maintain overall yields at desirable numbers.

The following examples identify problems of current methods and solutions/improvements to these problems presented by the disclosure implementing post-production measurements for a target device with samples at mid-edge and far-edge of the process window. A principal approach presented by this disclosure is to pre-optimize the thermal control loop (i.e. setting the right thermal parameters to compensate for the production process spread) for various points on an expected process window (i.e. range of devices of the same production line). The collection of the thermal parameters for each of these various points may take place in the pre-production phase and can be regarded as an initial learning stage. The derivation of multiple relevant thermal parameters are illustrated in the ensuing examples. Subsequently, on a per device basis, the post silicon measurements of each respective device will indicate which thermal parameters are used, e.g. loaded from the LUT, in order to maximize performance and minimize degradation due to thermal concerns during terminal device (i.e. UE) run-time.

In a first example, proper throttling and shutdown mechanisms for safe operation of a terminal device operating at high ambient temperatures is discussed. As active power starts to heat the terminal device, the leakage power will increase at a faster rate. Edge corner devices (e.g. devices with a substantially high leakage power) will face a thermal run away at a different temperature (lower) than typical corner devices.

Current thermal control entities which do not use the process speed/leakage spread information revealed by post production measurements may misuse throttling measures on temperature mitigation, i.e. the temperatures may be too severe by the time the throttling measures start. This is attributed to the shift of critical temperatures caused by the process spread. Furthermore, the throttling measures may be selected and/or parametrized inappropriately, e.g. the wrong throttling level. An edge corner device exhibiting a high leakage power level will have a lower thermal runaway point than a typical corner device. As a result, if only the single set of temperature parameters meant for a typical corner device are used for the edge corner device, the thermal management entity will not response appropriately when the device is close to the critical thermal runaway temperature, e.g. the thermal management entity will not implement the adequate throttling methods, resulting in the temperature increase not being addressed appropriately. The temperature rise will continue until the device goes into thermal runaway prior to the thermal management entity implementing a safety system shutdown to avoid permanent damage or even starting higher level throttling to reduce device temperature. In a best case scenario, such a device will be screened out from production, reducing process yield, and, in a worst case scenario, potentially pose a high safety risk to the consumer.

On the other hand, the thermal management entity presented in this disclosure provides for proper throttling and autonomous shutdown for devices across the entire process spread. By being more specifically tailored to each device's physical and electrical characteristics, the thermal management system of this disclosure identifies critical temperatures and provides the proper responses to changes in temperature in order to ensure optimal performance and device safety. The thermal performance management can more accurately schedule and adapt burst and throttle cycles, i.e. what the throttle and non-throttle rates need to be in order to sustain the device specific thermal limits. For example, the thermal performance management is configured to determine how much headroom is needed to be assigned, based on the device process characteristics, in order to sustain 60 seconds of full bandwidth data transfer. By reading stored thermal fuse settings from the fuse bits related to the post production measurement results, the terminal device is able to load the corresponding thermal profile in order to access the proper thermal parameters to implement in, for example, throttling and/or a shutdown mechanism. In this manner, the proper thermal runaway point is identified and the proper throttling steps may be taken in order to avoid low level thermal run away by triggering downlink data throttling as well as adding IDLE periods (i.e. duty cycling) at the temperature level identified by the corresponding thermal profile. The safety shutdown point is also properly identified for the device (e.g. by its leakage power classification) as a backup option in case the throttling measures did not adequately suppress the temperature increase. The throttling may fail to adequately suppress the device's temperature, for example, due to an excessive external access point (AP) or graphics load.

In a second example, reliable temperature monitoring and prediction for assessing throttling measures for a terminal device operating at high ambient temperature is discussed.

Current thermal control entities run temperature monitoring (e.g. periodic threshold evaluations) at the default sampling interval/period as determined by the single reference point of the typical corner case. For a terminal device at a far-edge of the process window which may experience more rapid temperature shifts, these default monitoring intervals may prove to be insufficient. Large temperature increases for such a device will be visible with higher latency, at which point, the throttling measures may be implemented too late and therefore be less effective. This will results in the user experiencing severe throttling and/or autonomous shutdown could occur at a higher rate, and as a result, user perception is reduced due to degradation in performance and quality.

On the other hand, the thermal management entity presented in this disclosure provides for reliable temperature monitoring and prediction by using the measurements (e.g. leakage power) from the post-silicon measurements to determine the specific thermal profile and associated sampling interval/period from the LUT. For example, a respective sampling period can be associated for each leakage power class within the process window. For those chips (i.e. SoCs) exhibiting a higher leakage power, a more frequent sampling period may be used for temperature monitoring.

In a third example, a terminal device operating at high ambient temperatures with high data traffic periodically followed by idle mode slots is discussed. In such a scenario, the terminal device temperature will fluctuate largely, thereby affecting chips with different electrical and physical characteristics produced across the process window differently. A chip from the center point of the process window (i.e. typical corner case) may experience a gradient no greater than 4 K/s, whereas a chip from an edge of the process window may experience gradients of 12 K/s under the same conditions.

Current thermal control entities do not tailor the maximum expected gradient specific to each chips' characteristics. Therefore, no relevant parameters are provided to cellular AFC and positioning related GNSS synchronization algorithms and components, which will operate at higher temperature gradient variations for chips at the edge of the process window resulting from the effects of a wider process spread. This in turn will degrade performance of RAT processing or require the use of expensive temperature compensating oscillators. A terminal device generates operating frequencies (e.g. CPU frequency, GPS frequency, RAT frequency, etc.) using a crystal oscillator. If greater temperature gradients are not accounted for, the crystal oscillator in such devices will degrade and eventually hit a point of failure. If higher than expected frequency drifts (due to faster temperature changes in sensitive crystal locations) are not accounted for, synchronization to the radio network/satellite system will fail.

On the other hand, the thermal management entity presented in this disclosure provides information to the AFC components, such as a device specific maximum temperature gradient. So, the thermal management entity determined by this disclosure defines the maximum gradient and provides this value to the AFC. For instance, chips at the right edge (i.e. fast corner) will have their thermal budgets reduced while chips at the left edge (i.e. slow corner) will have their thermal budgets enhanced. Similarly to the other thermal parameters associated with a thermal profile for each leakage power class of a process window, the expected maximum gradient for each class is stored in the LUT. The value of the expected maximum gradient may be determined through the initial learning phase (a prefabrication phase) where tests are run on each chip of a leakage power class (e.g. each of the eight sample points of the PDF curve across the process window in graph **310** of FIG. **3**). The initial tests or simulations determine the maximum temperature gradient for each leakage power class, and the associated maximum temperature gradient is stored for each class in the LUT to be loaded into each terminal device. Thereafter, once the leakage power of each chip during production is determined from the post-production measurements, the maximum temperature gradient associated with the chip's specific leakage power may be implemented into the AFC settings, e.g. AFC scheduling updates, AFC filtering periods, etc., by looking up the corresponding parameters in the LUT once the terminal device is initialized. In this manner, devices with chips at the center of the production process window and devices with chips at the edges of the production process window will be able to best configure their respective AFC components to account for each individual chip's specific thermal characteristics. For example, the AFC component can use the parameters collected from the LUT to reduce filtering lengths and increase estimation accuracy while retaining frequency resolution and cellular synchronization. In other words, the methods and devices of this disclosure calibrates the corresponding cellular and satellite AFC components with the exact knowledge of the maximum temperature related frequency deviation per chip.

Slow corner devices will exhibit lower temperature gradients (e.g. < 1 K/s) on the PCBs of the chips. Identifying such chips via the post production measurements will allow for tuning the UE algorithms for cellular and satellite position systems for higher resolution/accuracy. As maximum frequency deviations will be less, algorithms will be configured to operate in a smaller error window. By implementing the methods and devices of this disclosure, slow corner devices (e.g. devices with smaller transistor speeds [slower carrier mobility than normal]) will experience enhanced performance as throttling levels, as well as shutdown limits, may be raised. In this scenario, the post production measurements indicate a higher available thermal budget to be exploited.

Furthermore, terminal devices (e.g. UEs) may be configured to take real time measurements of the leakage power of their installed chips in order to update the thermal parameters in the thermal management system to detect device aging effects. This could be achieved, for example, by running a known use case/sequence, and measuring the current consumed and the temperature in order to calculate the leakage power. Deviations from the expected power output (at the measured temperature) may be attributable to aging, in which case the terminal device may load the appropriate thermal parameters from the LUT in order to account for such aging.

In sum, the methods and devices of this disclosure allow a high range of application to deal with higher degree of process variations and spreads which change the physical and thermal characteristics of silicon during the fabrication process.

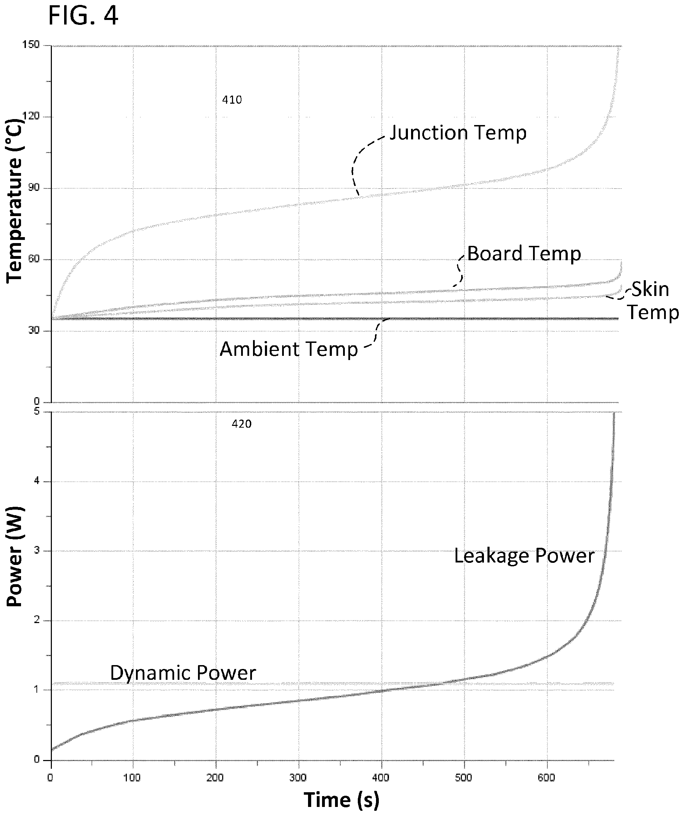

FIG. **4** shows two graphs **410** and **410** depicting the thermal runaway problem identified and solved by the thermal control management methods and devices of this disclosure. For FIG. **4**, it is assumed that the use case is not changing. It is appreciated that these graphs are exemplary in nature and may thus be simplified for purposes of this explanation.

Generally, SoC temperature limits are derived from two variables: chip reliability and thermal runaway. A typical SoC can sustain temperatures of up to 175 °C before facing permanent failure. However, in order to align with long-term reliability targets, a SoC's maximum junction temperatures are typically targeted to be in the range of 125 °C. This temperature limit is derived from the thermal runaway phenomena that is produced from a positive feedback loop between high leakage power and temperature. The autonomous shutdown temperature is determined from the lower of the typical maximum temperature a SoC can sustain and the thermal runaway temperature:

$$\mathbf{min}(\max SoC\ temp, thermal\ runaway\ temp) \tag{1}$$

In FIG. **4**, a simulation of a thermal runaway temperature of a SoC is shown.

In graph **410**, the junction temperature, circuit board (board) temperature, skin (i.e. case of the terminal device) temperature, and ambient temperature curves are shown. In graph **420**, the dynamic power and the leakage power of the terminal device are shown.

The total power, comprising dynamic and leakage power, initially contributes to the self-heating of the chip, resulting in increasing junction temperatures. With this rising temperature, the leakage current increases exponentially, leading to higher total power consumption, which in turn, leads to further heating, and so forth. In other words, a closed positive feedback loop is between the leakage power and the junction temperature, which leads to the thermal runaway.

With knowledge of the chip's thermal resistance, the critical leakage power, $P_{CritLeak}$, can be determined:

$$P_{CritLeak} = \frac{T_l}{R_{th-JA}} \qquad\qquad (1)$$

where $T_l$ is the process dependent leakage slope parameter. This parameter describes the exponential behavior of leakage power versus chip temperature, which changes with CMOS transistor physics and generally ranges from 15K to 40K; $R_{th-JA}$ is the thermal resistance determined by the package material and geometry data and generally ranges from 10 K/W to 30 K/W. Based on these parameters, a dependency graph between $T_l$, $R_{th-JA}$, $P_{CritLeak}$, the thermal runaway trigger temperature can be setup, as demonstrated in FIG. **4**.

In an exemplary aspect of this disclosure, a terminal device's specific thermal runaway temperature (as governed by the SoC in the terminal device) may be determined in the following manner.

A direct benefit of utilizing the post-production measurements is to estimate the device specific thermal runaway temperature. This can be achieved by setting up the LUT as described above and determining the critical temperature that triggers the thermal runaway $T_{crit}$ by using the leakage power, $P_{CritLeak}$:

$$\text{Thermal Runaway Temperature} = \text{LUT}(P_{CritLeak} = P_{Iddq}, T_{Crit}) \qquad (2)$$

Another option is to make use of the exponential behavior of leakage power, for which a single leakage reference point ($P_{Leak}$ @ $T_{Room}$) can be used to calculate a thermal runaway temperature at other measured leakage powers ($T_{Crit}$ @ $P_{CritLeak}$):

$$P_{CritLeak} = P_{Leak} * \exp\left(\frac{T_{Crit} - T_{Room}}{T_l}\right) \qquad (3)$$

where the Iddq test measurements are used as the reference point, $P_{Leak}$ and $T_{Room}$

$$P_{CritLeak} = P_{Iddq} * \exp\left(\frac{T_{Crit} - T_{Iddq}}{T_l}\right) \qquad (4)$$

$P_{CritLeak}$ can be calculated from Equation (1) and substituted into Equation (4), which leaves $T_{Crit}$ as the only remaining unknown, the critical temperature which triggers thermal runaway for the measured chip.

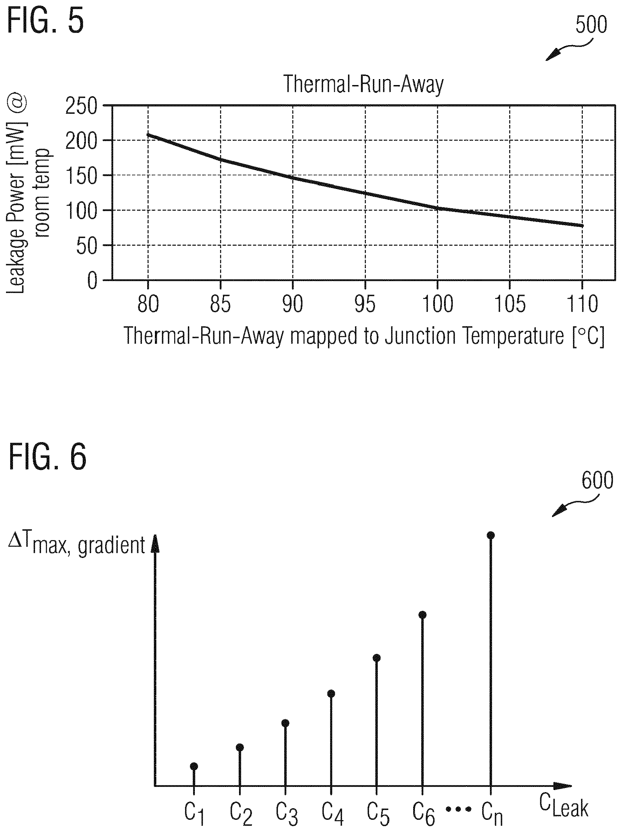

FIG. **5** is a graph **500** showing the relationship between thermal runaway temperature and leakage power measurement. It is appreciated that graph **500** is exemplary in nature and may thus be simplified for purposes of this explanation.

The leakage power distribution of a process window may vary quiet considerably, for example, as shown by the CDF in FIG. **2**. Similarly, the thermal runaway trigger temperature may also vary for chips across the entire process window. The thermal management mechanism in this disclosure stores, for each leakage power classification in the LUT, its corresponding thermal runaway temperature ,so that once the leakage power of a chip has been measured at a reference temperature, the accompanying thermal runaway temperature is calculated and used in that particular chip's autonomous shutdown mechanism.

FIG. **6** is a graph **600** showing which maximum temperature gradient ($\Delta T_{max,gradient}$) to use with respect to thermal algorithms and filters in the thermal management system of a UE as a function of the leakage power class ($C_{leak}$). It is appreciated that graph **600** is exemplary in nature and may thus be simplified for purposes of this explanation.

Each leakage power class ($C_1$, $C_2$, ..., $C_n$) along the x-axis of graph **600** corresponds to a class of chips selected along the PDF of a production window (e.g. points selected along PDF in **310** of FIG. **3**). This methods and device presented by this disclosure utilizes the post-production measurements to calibrate and optimize the terminal device, e.g. UE, thermal manager in which the chip is installed. Similarly, these measurements are used to calibrate RAT specific AFC algorithms. Each post-production measurement classification (i.e. leakage power class) is used for assigning a maximum expected temperature gradient/rate ($\Delta T_{max,gradient}$) for a required set of ambient conditions $T_a$, where -30 °C $\leq T_a \leq 65$ °C. A database or LUT is setup to store a $\Delta T_{max,gradient}$ for each leakage power class ($C_{Leak}$).

Various UE thermal algorithms and filters can be optimized dependent on the temperature gradients determined on a per-device bases. For instance, temperature prediction and slope detection algorithms can be configured by the leakage power class with expected temperature dynamics. A slope detection unit for a particular UE, for example, may be configured with a $\Delta T_{max,gradient}$= 5 K/s instead of the default 1 K/s if the UE leakage power class is determined to be at the higher end of the production window. Therefore, the measurement window is shortened to account for the device's susceptibility to experience increased jumps in temperature.

In another aspect of this disclosure, the sensor sensing periods for temperature threshold detection can be adjusted by, for example, extending temperature evaluations periods for devices with a low leakage power class (and vice versa). Temperature tracking filters can be updated similarly, thereby updating throttling controls.

In another aspect of this disclosure, RAT specific AFC algorithms are tuned on a device-specific basis from the determined maximum expected temperature gradient ($\Delta T_{max,gradient}$). Based on the ambient temperature measurement and the leakage power class from the post-production measurements, the AFC algorithms are calibrated to work optimally for each specific device and the observed environmental conditions. For example, based on the leakage power class and ambient temperature of the post-production measurements, a max gradient up to 10 K/s is expected, so the AFC algorithms can be calibrated based on the specific gradient value.

Modern SoC designs include multiple on-chip sensors. The number and placement of these sensors may be configured on a worst case scenario, i.e. configured to detect temperatures changes over a chip before reaching thermal equilibrium. Based on the leakage power class obtained from the post-production measurements, sensors which are not needed are determined and switched off from the initial system boot to adapt the device and process corner basis based on the required number of active sensors: For example, devices with a higher leakage power class will require more active sensors in order to detect higher temperature variations over the chip. Devices with mid or low leakage power classes will be able to provide the same functionality with fewer active sensors, covering the same temperature dynamics and measurements intervals while saving on CPU active times (i.e. less interrupt sources) and conserving power resources since not all sensors are switched on.

In a further aspect of this disclosure, a terminal device (e.g. UE) may be configured to update its thermal management system by performing additional post-production measurements on the SoC (e.g. measuring the current (I) for a reference use case, thereby sensing the chip temperature, and evaluating power deviations from an expected power value at the given reference temperature) after a predetermined period of time, e.g. every week, ever month, or every year, etc. The terminal device is configured to determine the updated leakage power class from these measurements, which may have changed due to, for example, aging of the SoC. If the leakage power has changed, the terminal device may load the new leakage power class thermal parameters from the LUT stored on its memory, and configure its thermal management system accordingly. In this manner, a terminal device is be able to account for changes in the SoC's characteristics over time.

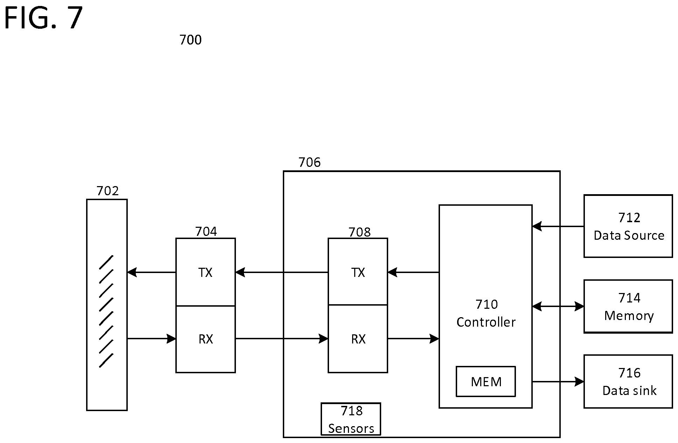

FIG. **7** shows an internal configuration of a user equipment (UE) **700**, which may be configured to perform the adaptive filtering procedure of this disclosure. As shown in FIG. 7, UE **700** may include antenna system **702**, radio frequency (RF) transceiver **704**, baseband modem **706** (including physical layer processing circuit **708** and controller **710**), data source **712**, memory **714**, data sink **716**, and sensors **718**. Although not explicitly shown in FIG. 7, UE **700** may include one or more additional hardware, software, and/or firmware components (such as processors/microprocessors, controllers/microcontrollers, other specialty or generic hardware/processors/circuits, etc.), peripheral device(s), memory, power supply, external device interface(s), subscriber identify module(s) (SIMs), user input/output devices (display(s), keypad(s), touchscreen(s), speaker(s), external button(s), camera(s), microphone(s), etc.), etc.

In an abridged operational overview, UE **700** may transmit and receive radio signals on one or more radio access network (RANs), e.g. an LTE RAN. Baseband modem **706** may direct such communication functionality of UE **700** according to the communication protocols associated with each RAN, and may execute control over antenna system **702** and RF transceiver **704** in order to transmit and receive radio signals according to the formatting and scheduling parameters defined by each communication protocol.

UE **700** may transmit and receive radio signals with antenna system **702**, which may be a single antenna or an antenna array composed of multiple antennas and may additionally include analog antenna combination and/or beamforming circuitry. The receive path (RX) of RF transceiver **704** may receive analog radio frequency signals from antenna system **702** and perform analog and digital RF front-end processing on the analog radio frequency signals to produce digital baseband samples (e.g. In-Phase/Quadrature (IQ) samples) to provide to baseband modem **706**. RF transceiver **704** may accordingly include analog and digital reception circuitry including amplifiers (e.g. a Low Noise Amplifier (LNA), filters, RF demodulators (e.g. an RF IQ demodulator)), and analog-to-digital converters (ADCs) to convert the received radio frequency signals to digital baseband samples. In the transmit path (TX), RF transceiver **704** may receive digital baseband samples from baseband modem **706** and perform analog and digital RF front-end processing on the digital baseband samples to produce analog radio frequency signals to provide to antenna system **702** for wireless transmission. RF transceiver **704** may thus include analog and digital transmission circuitry including amplifiers (e.g. a Power Amplifier (PA), filters, RF modulators (e.g. an RF IQ modulator), and digital-to-analog converters (DACs) to mix the digital baseband samples received from baseband modem **706** to produce the analog radio frequency signals for wireless transmission by antenna system **702**. Baseband modem **706** may control the RF transmission and reception of RF transceiver **704**, including specifying transmit and receive radio frequencies for operation of RF transceiver **704**.

As shown in FIG. **7**, baseband modem **706** may include physical layer processing circuit **708**, which may perform physical layer (i.e. Layer 1) transmission and reception processing to prepare outgoing transmit data provided by controller **710** for transmission via RF transceiver **704** and prepare incoming received data provided by RF transceiver **704** for processing by controller **710**. Physical layer processing circuit **710** may accordingly perform one or more of channel estimation, adaptive filtering, error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc. Physical layer processing circuit **708** may be structurally realized as hardware logic, e.g. as an integrated circuit or FPGA, as software logic, e.g. as program code defining arithmetic, control, and I/O instructions stored in a non-transitory computer-readable storage medium and executed on a processor, or as a combination of hardware and software logic. Although not explicitly shown in FIG. **7**, physical layer processing circuit **708** may include a control circuit such as a processor configured to control the various hardware and software processing components of physical layer processing circuit **708** in accordance with physical layer control logic defined by the communications protocol for the relevant radio access technologies (RATs). Furthermore, while physical layer processing circuit **708** is depicted as a single component in FIG. **7**, physical layer processing circuit **708** may be collectively composed separate sections of physical layer processing circuitry where each respective section is dedicated to the physical layer processing of a particular RAT.

UE **700** may be configured to operate according to one or more RATs, which may be directed by controller **710**. Controller **710** may thus be responsible for controlling the radio communication components of UE **700** (antenna system **702**, RF transceiver **704**, and physical layer processing circuit **708**) in accordance with the communication protocols of each supported RAT, and accordingly may represent the Access Stratum (AS) and Non-Access Stratum (NAS) (also encompassing Layer 2 and Layer 3) of each supported RAT. Controller **710** may be structurally embodied as a protocol processor configured to execute protocol software (retrieved from controller memory **MEM** as shown in FIG. **7**) and subsequently control the radio communication components of UE **700** in order to transmit and receive communication signals in accordance with the corresponding protocol control logic defined in the protocol software.

Controller **710** may therefore be configured to manage the radio communication functionality of UE **700** in order to communicate with the various radio and core network components of a radio communication network, and accordingly may be configured according to the communication protocols for a 5G network, an LTE network, a GSM/UMTS legacy network, etc. Controller **710** may either be a unified controller that is collectively responsible for all supported RATs (e.g. LTE and GSM/UMTS) or may be composed of multiple separate controllers where each controller is a dedicated controller for a particular RAT, such as e.g. a dedicated LTE controller and a dedicated legacy controller (or alternatively a dedicated LTE controller, dedicated GSM controller, and a dedicated UMTS controller). Regardless, controller **710** may be responsible for directing radio communication activity of UE **700** according to the communication protocols of the LTE and legacy networks. As previously noted regarding physical layer processing circuit **708**, one or both of antenna system **702** and RF transceiver **704** may similarly be partitioned into multiple dedicated components that each respectively correspond to one or more of the supported RATs. Depending on the specifics of each such configuration and the number of supported RATs, controller **710** may be configured to control the radio communication operations of UE **700** in accordance with a master/slave RAT hierarchical or multi-SIM scheme.

UE **700** may further comprise data source **712**, memory **714**, and data sink **716**, where data source **712** may include sources of communication data above controller **710** (i.e. above the NAS/Layer 3) and data sink **716** may include destinations of communication data above controller **710** (i.e. above the NAS/Layer 3). Such may include, for example, an application processor of UE **700**, which may be configured to execute various applications and/or programs of UE **700** at an application layer of UE **700**, such as e.g. an Operating System (OS), a User Interface (UI) for supporting user interaction with UE **700**, and/or various user applications. The application processor may interface with baseband modem **706** (as data source **712**/data sink **716**) as an application layer to transmit and receive user data such as voice data, audio/video/image data, messaging data, application data, basic Internet/web access data, etc., over a the radio network connection(s) provided by baseband modem **706**. Data source **712** and data sink **716** may additionally represent various user input/output devices of UE **700**, such as display(s), keypad(s), touchscreen(s), speaker(s), external button(s), camera(s), microphone(s), etc., which may allow a user of UE **700** to control various communication functions of UE **700** associated with user data.

Memory **714** may include a memory component of UE **700**, such as e.g. a hard drive or another such permanent memory device. Although not explicitly depicted in FIG. 3, the various other components of UE **700** shown in FIG. **7** may additionally each include integrated permanent and non-permanent memory components, such as for storing software program code, buffering data, etc.

UE **700** may further consist of one or more sensors **718** distributed at difference locations across the device. One or more of sensors **718**, for example, may be located within the baseband modem **706** or any other component of the UE **700**. Sensors **718** may be configured to take thermal measurements at their specific location and forward this information to a thermal manager of UE **700**. Sensors **718** may further be configured to be turned on or off dependent on the leakage power class of a chip (e.g. SoC) installed into UE **700**.

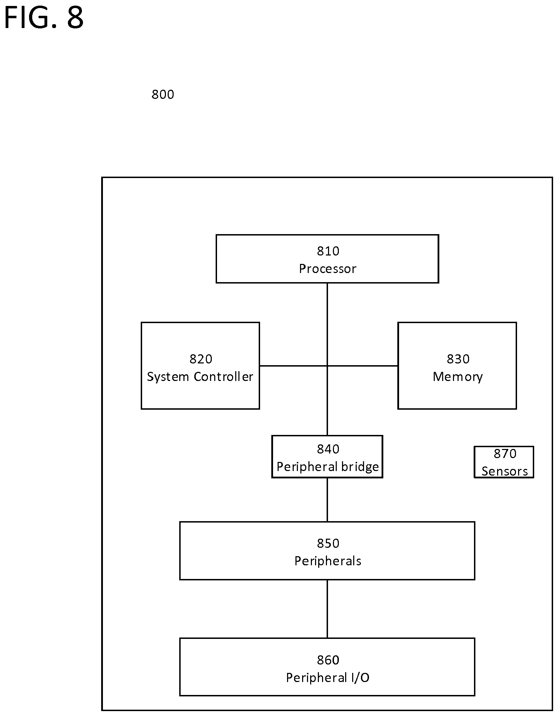

FIG. **8** shows a system on chip (SoC) **800** described in an aspect of this disclosure. It is appreciated that SoC **800** is exemplary in nature and may thus be simplified for purposes of this explanation. Although not explicitly shown SoC **800** may include one or more additional hardware, software, and/or firmware components. SoC may be installed, for example, in UE **700**.

An SoC is to an integrated circuit that integrates all components of a computer or other system into a single chip. It may contain a variety of different functions, including digital, analog, mixed-signal, radio frequency (RF), etc., on a single chip substrate. SoCs are capable of running software and may be used with a number of extremal peripherals, e.g. memory chips, other device interfaces, etc. SoCs are commonly used in mobile electronics, e.g. UEs, wearables, tablets, etc., because of their low power consumption. In sum, an SoC includes the chip circuitry, software, and integration.

SoC **800** includes a processor **810** containing a processor core, memory, and programmable circuits. Processor **810** may include one or any combination of a microcontroller, microprocessor or digital signal processor. The processor **810** may include mixed signal microcontrollers, integrating analog components with digital components. Multiprocessor SoCs may include more than one processor core.

System controller **820** may include thermal management, power management, and/or other advanced integrated controls. The thermal management control may be configured as described in this disclosure. System controller **820** may further include one or more frequency oscillator(s) and corresponding controllers. These oscillators may be crystal oscillators configured to produce signals to communicate with outside sources and/or be used within the device. For example, one or more crystal oscillators may be configured to generate accurate frequency carrier signals to communicate with a base station via any of a legacy RAT (GSM, CDMA, etc.), LTE, etc. The thermal management system control described in this disclosure is specifically configured to thwart the effects of frequency drift in the oscillators of the chips produced over the entire process window (i.e. over an entire batch of produced chips) by estimating the maximum temperature gradient based on the chip measurements and configuring frequency correction components within the cellular or satellite communication chipsets accordingly.

SoC **800** may further include a memory **830** configured to store system information. Memory **830** may include one or any combination of ROM, RAM, EEPROM, SRAM, or flash memory. Furthermore, memory **800** may further include controllers, e.g. memory controller(s), peripheral data controller(s), etc., and additional interfaces, e.g. external bus interface(s), flash programming, etc. Memory **830** may further include sections dedicated as fuse bytes configured to determine various hardware features.

Other components of SoC **800** may include one or more peripheral bridges **840** for connecting to one or more peripherals **850** and the peripherals' corresponding Input/outputs (I/O). Additionally, sensors **870** may be located in one or more areas of SoC **800** and be configured to obtain thermal information and provide it to other parts of the SoC, e.g. Processor **810**, and/or other components external to SoC **800**. Sensors **830** may be further configured to be turned on or off depending on instructions received.

The different components of SoC **830** may be interconnected by one or more of the following: an Advanced Microcontroller Bus Architecture (AMBA), an Advanced Peripheral Bus (APB), an Advanced System Bus (ASB), an Advanced High Performance Bus (AHPB), or other similar architectures.

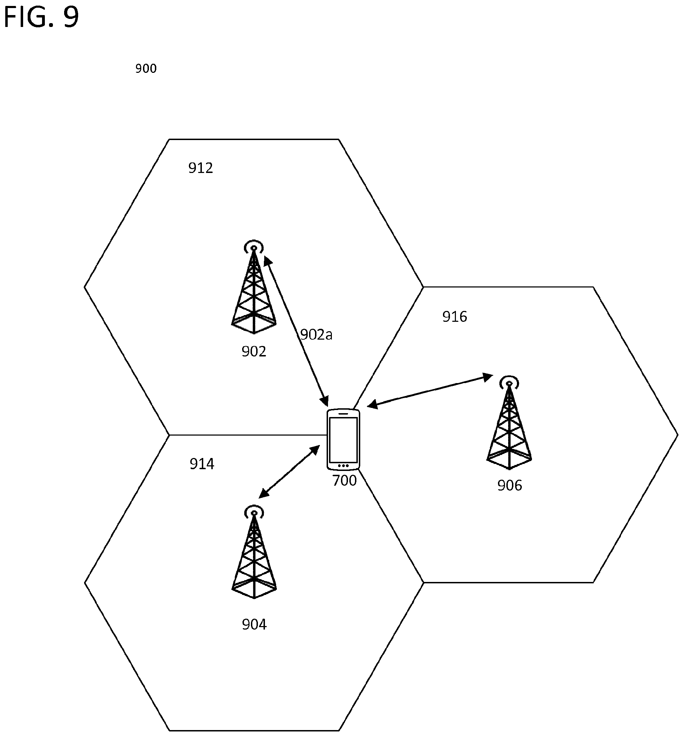

FIG. **9** shows a radio access network **900** in an aspect of this disclosure. Network **900** may be an LTE network including a UE **700** and base stations **902-906.** Base stations **902-906** may be LTE base stations (i.e. eNodeBs) and may provide coverage to cells **912-916**, respectively. Furthermore, cells **912-916** may be sectorized, i.e. composes of multiple LTE cells. Although shown as having explicit boundaries in network **900**, it is appreciated that cells **912-916** may have overlapping coverage.

UE **700** may exchange uplink and/or downlink data with one or more of base stations **902-906**. For example, UE **700** may be connected to cell **912** via base station **902** over radio channel **902a**. Furthermore, at least one of either UE **700** or base station **902** may be configured according to a Multiple Input Multiple Output (MIMO) scheme, in which case radio channel **902a** may include a plurality of MIMO channels that each correspond to a unique path between a transmit antenna of base station **902** and a receive antenna of UE **700**.

The UE **700** may be configured with a thermal manager system to implement throttling procedures as described in this disclosure. Accordingly, UE **700** may be configured to throttle uplink and/or downlink data with base station **902** based on thermal considerations. Furthermore, UE **700** may be configured to implement RAT specific AFC and/or GNSS algorithms according to procedures described in this disclosure.

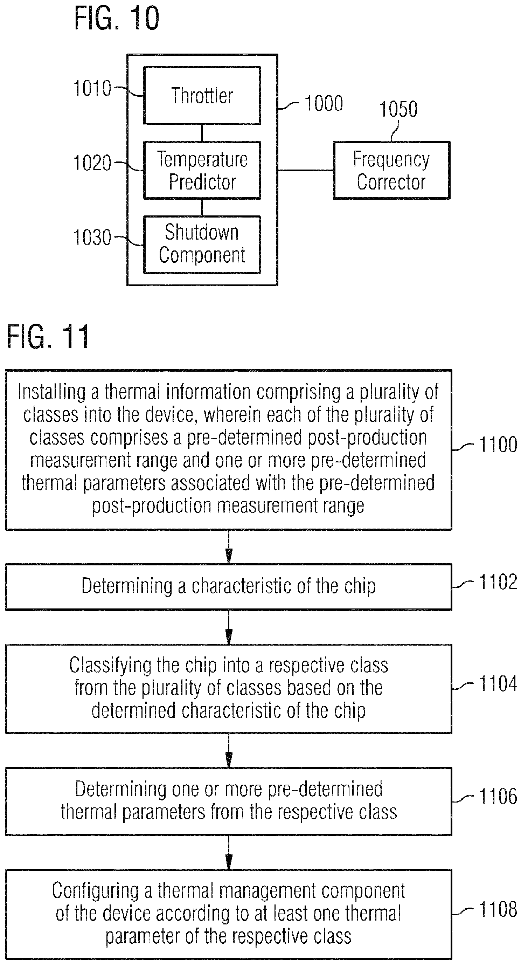

FIG. **10** shows a thermal management component **1000** in an aspect of this disclosure. It is appreciated that thermal management component **1000** is exemplary in nature and may thus be simplified for purposes of this explanation. Accordingly, it is understood that a single component of thermal management component **1000** may be equivalently split into two separate components, and conversely that two separate components of thermal management component **1000** may be combined into a single equivalent component.

The thermal management component **1000** may comprise hardware, software, firmware, or any combination thereof, configured to implement the methods or realize the devices of this disclosure. Thermal management component **1000** may include one or any combination of a throttle **1010** configured to implement the throttling methods of this disclosure, a temperature predictor **1020** configured to predict a temperature according to the measured leakage power value of the chip and an amount of processing scheduled to be executed at the chip, and a shutdown component **1030** configured to use the thermal runaway temperature to determine software and/or autonomous (i.e. device) shutdown temperatures. Thermal management component **1010** may further include a frequency corrector configured to configure AFC algorithms based on the maximum expected temperature gradient.

FIG. **11** shows a flowchart describing a method for thermal management in an aspect of this disclosure.

The flowchart in FIG. **11** shows a method for configuring a thermal management component of a device having a chip installed in the device, the method including: installing a thermal information comprising a plurality of classes into the device **1100**, wherein each of the plurality of classes comprises a pre-determined post-production measurement range and one or more pre-determined thermal parameters associated with the pre-determined post-production measurement range; determining a characteristic of the chip **1102**; classifying the chip into a respective class from the plurality of classes based on the determined characteristic of the chip **1104**; determining one or more pre-determined thermal parameters from the respective class **1106**; and configuring a thermal management component of the device according to the one or more determined pre-determined thermal parameters **1108**.

In one exemplary aspect of this disclosure, the determining of the characteristic of the chip **1102** may occur in a chip post-production, but prior to chip installation into the terminal device (e.g. UE). The terminal device may be configured to read out the post-production measurement stored on the chip in order to configure its thermal management component with the appropriate settings. In this manner, the terminal device may load the appropriate thermal profile (i.e. thermal parameters) upon boot-up.

In another/corresponding exemplary aspect of the disclosure, the determining of the characteristic of the chip **1102** may (also) occur after chip installation into the terminal device. In this manner, the terminal device may update its thermal management component to account for chip "aging," i.e. changes in the chip's physical and/or electrical characteristics.

It is appreciated that flowchart in FIG. **11** is exemplary in nature and may thus be simplified for purposes of this explanation. Accordingly, the methods/devices disclosed herein encompass alternatives that cover similar subject matter without departing from the scope of this disclosure.

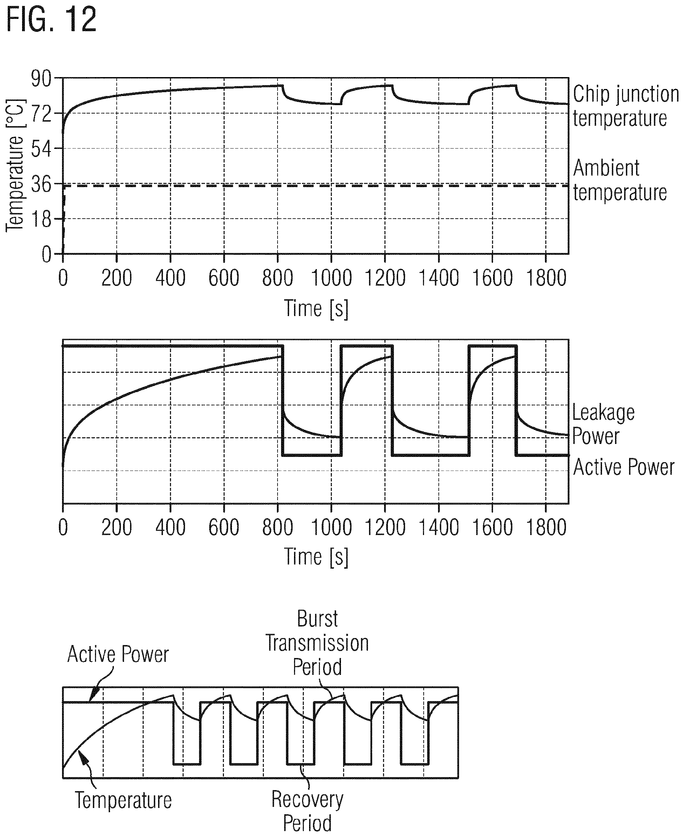

FIG. **12** shows a series of graphs illustrating results of performance management methods of this disclosure.

In the top graph, the chip junction temperature and the ambient temperatures are plotted along as a function of time. In the middle graph, the active power and the leakage power of the chip is plotted along the same time axis as the top graph.

The bottom graph shows the active power and temperature profile exhibited by a chip in the burst transmission periods (exhibited by peaks in active power) and recovery periods (exhibited by valleys in the active power). As shown in this graph, the temperature of the chip is dependent on the activity of the chip, and must be strictly monitored and controlled to improve terminal device performance and longevity. The methods and devices of this disclosure make use of the specific chip thermal behavior and profile shown in the scheduling burst and throttling cycles in order to improve terminal device performance.

While the graphs in FIG. **12** show the relationship between the leakage power of a chip and the active power behavior (i.e. burst transmission periods and recovery periods), it is appreciated that this disclosure also covers the relationship of other post production-measurements (e.g. transistor speed, other temperature tests, etc.) as well. In the case of transistor speed, for example, the thermal profile for a chip will be specific to the transistor speed (i.e. higher transistor speeds for chips of higher classes may lead to higher temperatures than chips of lower classes) and the appropriate thermal parameters will be used for thermal management.

In Example 1, a method for configuring a thermal management component of a device having a chip installed in the device, the method including installing a thermal information comprising a plurality of classes into the device, wherein each of the plurality of classes comprises a pre-determined post-production measurement range and one or more pre-determined thermal parameters associated with the pre-determined post-production measurement range; determining a characteristic of the chip; classifying the chip into a respective class from the plurality of classes based on the determined characteristic of the chip; determining one or more thermal parameters of the respective class; and configuring a thermal management component of the device according to at least one of the one or more determined thermal parameters of the respective class.

In Example 2, the subject matter of Example 1 may include storing the determined characteristic in a register on the chip.

In Example 3, the subject matter of Example 2 may include the device reading the stored determined characteristic from the register on the chip.

In Example 4, the subject matter of Examples 1-3 may include wherein the thermal management component comprises software configured to be executed by a processing circuitry of the device.

In Example 5, the subject matter of Examples 1-4 may include wherein the thermal management component comprises a throttling component.

In Example 6, the subject matter of Example 5 may include the throttling component configured to implement one or more stages of bandwidth throttling.

In Example 7, the subject matter of Examples 1-6 may include one of the one or more pre-determined thermal parameters is a first throttling temperature.

In Example 8, the subject matter of Example 7 may include triggering a first stage of bandwidth throttling at a first throttling temperature.

In Example 9, the subject matter of Example 8 may include removing the first stage of bandwidth throttling upon the device temperature dropping below the first temperature.

In Example 10, the subject matter of Examples 7-9 may include wherein one of the one or more pre-determined thermal parameters is a second throttling temperature.

In Example 11, the subject matter of Example 10 may include triggering a second stage of bandwidth throttling at the second throttling temperature, wherein the second throttling temperature is higher than the first throttling temperature and wherein the second stage throttles data at a higher rate than the first stage.

In Example 12, the subject matter of Example 11 may include transitioning from the second stage of bandwidth throttling to the first stage of bandwidth throttling when the device temperature drops below the second temperature.

In Example 13, the subject matter of Examples 5-12 may include wherein the throttling component is configured to throttle one or more signals with a radio access network (RAN).

In Example 14, the subject matter of Example 13 may include wherein at least one of the one or more signals comprise a data signal.

In Example 15, the subject matter of Examples 1-14 may include wherein the thermal management component comprises a temperature predictor.

In Example 16, the subject matter of Examples 1-15 may include the temperature predictor configured to predict a potential device temperature based on the determined characteristic and an amount of processing scheduled to be executed at the chip.

In Example 17, the subject matter of Example 16 may include coordinating the temperature predictor and the throttling component to complement each other, wherein the temperature predictor is configured to provide the throttling component with the potential device temperature.

In Example 18, the subject matter of Examples 1-17 may include managing a performance of the chip based on one or more of the pre-determined thermal parameters of the respective class.

In Example 19, the subject matter of Example 18 may include scheduling at least one of a data burst or a throttle cycle based on one or more of the pre-determined thermal parameters of the respective class.

In Example 20, the subject matter of Example 19 may include predicting a length of at least one of the data burst or the throttle cycle based on one or more pre-determined thermal parameters of the respective class.

In Example 21, the subject matter of Examples 1-20 may include determining the characteristic of the chip at a reference temperature.

In Example 22, the subject matter of Examples 1-21 may include wherein one of the one or more pre-determined thermal parameters is a thermal runaway temperature.

In Example 23, the subject matter of Example 22 may include determining the thermal runaway temperature from the determined characteristic.

In Example 24, the subject matter of Example 23 may include determining the thermal runaway temperature from the chip's thermal resistance.

In Example 25, the subject matter of Example 24 may include determining the thermal runaway temperature from the determined characteristic in comparison to a reference measurement at a reference temperature.

In Example 26, the subject matter of Examples 22-25 may include configuring a shutdown component using the thermal runaway temperature.

In Example 27, the subject matter of Example 26 may include configuring the shutdown component using a pre-determined maximum temperature which the chip can sustain before experiencing permanent failure.

In Example 28, the subject matter of Example 27 may include wherein the pre-determined maximum temperature is determined based on physical or electrical characteristics of the chip.

In Example 29, the subject matter of Example 28 may include wherein the physical or electrical characteristics comprise characteristics of materials from which the chip is made.

In Example 30, the subject matter of Examples 1-29 may include wherein one of the one or more thermal parameters is a maximum expected temperature gradient.

In Example 31, the subject matter of Example 30 may include wherein the maximum expected temperature gradient increases as the class increases.

In Example 32, the subject matter of Examples 30-31 may include wherein the thermal management component comprises a frequency corrector.

In Example 33, the subject matter of Example 32 may include wherein the frequency corrector is for a radio access technology (RAT) of one or more of the following: a 5G RAT, a 4G RAT, or a 3G RAT.

In Example 34, the subject matter of Examples 32-33 may include wherein the frequency corrector is for a Global Navigation Satellite System (GNSS).

In Example 35, the subject matter of Examples 32-34 may include the frequency corrector calibrating a cellular frequency correction algorithm using the maximum expected temperature gradient.

In Example 36, the subject matter of Example 35 may include shortening a temperature measurement interval as the maximum expected temperature gradient increases.

In Example 37, the subject matter of Example 36 may include lengthening a temperature measurement interval as the maximum expected temperature gradient decreases.

In Example 38, the subject matter of Examples 36-37 may include activating temperature sensors of the device based on the determined characteristic.

In Example 39, the subject matter of Example 38 may include activating more temperature sensors as the value of the determined characteristic increases.

In Example 40, the subject matter of Examples 1-39 may include wherein the pre-determined post-production measurement range is a leakage power range.

In Example 41, the subject matter of Example 40 may include wherein the determined characteristic of the chip is a leakage power measurement.

In Example 42, the subject matter of Examples 1-41 may include wherein the pre-determined post-production measurement range is a transistor speed range.

In Example 43, the subject matter of Example 42 may include wherein the determined characteristic of the chip is a transistor speed.

In Example 44, the subject matter of Examples 1-43 may include wherein the determined characteristic is a physical and/or electrical characteristic.

In Example 45, the subject matter of Examples 1-44 may include wherein the plurality of classes cover at least substantially all of a production process window from which the chip was produced.

In Example 46, a machine readable storage including machine-readable instructions, when executed, to implement the subject matter of Examples 1-45. In one aspect of this disclosure, the machine readable storage may be a non-transitory computer readable medium.

In Example 47, a device having a built-in chip adapted for thermal management, the device including a storage element configured to store a thermal information comprising a plurality of classes corresponding to the chip, wherein each of the plurality of classes comprises a pre-determined post-production measurement range and one or more pre-determined thermal parameters associated with the predetermined post-production measurement range; a processor operatively coupled to the storage element and configured to: determine a characteristic of the chip; classify the chip into a respective class from the plurality of classes based on the determined characteristic of the chip; determine one or more pre-determined thermal parameters from the respective class; and configure a thermal management component in the device according to the one or more pre-determined thermal parameters from the respective class.

In Example 48, the subject matter of Example 47 may include the chip being installed in a signal processing component of the device.

In Example 49, the subject matter of Examples 47-48 may include wherein the chip comprises transistors with nodes measuring 10 nanometers or less.

In Example 50, the subject matter of Examples 47-49 may include wherein the processor is further configured to throttle data.

In Example 51, the subject matter of Example 50 may include wherein processor is configured to perform the throttling to implement one or more stages of bandwidth throttling.

In Example 52, the subject matter of Examples 47-51 may include wherein one of the one or more pre-determined thermal parameters is a first throttling temperature.

In Example 53, the subject matter of Example 52 may include the processor further configured to trigger a first stage of bandwidth throttling at the first throttling temperature.

In Example 54, the subject matter of Example 53 may include the processor further configured to remove the first stage of bandwidth throttling when the device temperature drops below the first temperature.

In Example 55, the subject matter of Examples 52-54 may include wherein one of the one or more pre-determined thermal parameters is a second throttling temperature.

In Example 56, the subject matter of Example 55 may include the processor further configured to trigger a second stage of bandwidth throttling at the second throttling temperature, wherein the second throttling temperature is higher than the first throttling temperature and wherein the second stage throttles data at a higher rate than the first stage.

In Example 57, the subject matter of Example 56 may include the processor further configured to trigger a transition from the second stage of bandwidth throttling to the first stage of bandwidth throttling upon the device temperature dropping below the second throttling temperature.

In Example 58, the subject matter of Examples 50-57 may include wherein the processor is configured to throttle one or more signals of a radio access network (RAN).

In Example 59, the subject matter of Example 58 may include wherein at least one of the one or more signals comprise a data signal.

In Example 60, the subject matter of Examples 47-59 may include the processor further configured to perform a temperature prediction.

In Example 61, the subject matter of Examples 47-60 may include the temperature prediction configured to predict a potential device temperature based on the determined characteristic and an amount of processing scheduled to be executed at the chip.

In Example 62, the subject matter of Example 61 may include the processor further configured to coordinate the temperature predictor and the throttling to complement each other, wherein the temperature predictor is configured to provide the throttling component with the potential device temperature.

In Example 63, the subject matter of Examples 47-62 may include the processor further configured to manage a performance of the chip based on one or more of the pre-determined thermal parameters of the respective class.

In Example 64, the subject matter of Examples 47-63 may include the processor further configured to schedule at least one of a data burst or a throttle cycle based on the one or more of the pre-determined thermal parameters of the respective class.

In Example 65, the subject matter of Example 64 may include the processor further configured to predict a length of at least one of the data burst or the throttle cycle based on one or more pre-determined thermal parameters of the respective power class.

In Example 66, the subject matter of Examples 47-65 may include determining the characteristic at a reference temperature.

In Example 67, the subject matter of Examples 47-66 may include wherein one of the one or more pre-determined thermal parameters is a thermal runaway temperature.

In Example 68, the subject matter of Example 67 may include determining the thermal runaway temperature from the determined characteristic.

In Example 69, the subject matter of Example 68 may include determining the thermal runaway temperature from the chip's thermal resistance.

In Example 70, the subject matter of Example 68 may include determining the thermal runaway temperature from the determined characteristic in comparison to a reference measurement at a reference temperature.

In Example 71 the subject matter of Examples 67-70 may include the processor further configured to implement a shutdown mechanism using the thermal runaway temperature.

In Example 72, the subject matter of Example 71 may include the processor further configured to implement the shutdown mechanism using a pre-determined maximum temperature which the chip can sustain before experiencing permanent failure.

In Example 73, the subject matter of Example 72 may include wherein the pre-determined maximum temperature is determined based on the determined characteristic.

In Example 74, the subject matter of Example 72 may include wherein the pre-determined maximum temperature is determined from physical or electrical characteristics of the chip. For example, the physical or electrical characteristics may include characteristics of the materials from which the chip is made.

In Example 75, the subject matter of Examples 47-74 may include wherein one of the one or more pre-determined thermal parameters is a maximum expected temperature gradient.

In Example 76, the subject matter of Example 75 may include wherein the maximum expected temperature gradient increases as the class increases.

In Example 77, the subject matter of Examples 75-76 may include wherein the thermal management component comprises a frequency corrector.

In Example 78, the subject matter of Example 77 may include wherein the frequency corrector is for a radio access technology (RAT) of one or more or the following: a 5G RAT, a 4G RAT, or a 3G RAT.

In Example 79, the subject matter of Examples 77-78 may include wherein the frequency corrector is for a Global Navigation Satellite System (GNSS).

In Example 80, the subject matter of Examples 77-79 may include the frequency corrector configured to calibrate a cellular frequency correction algorithm using the maximum expected temperature gradient.

In Example 81, the subject matter of Example 80 may include the thermal management component further configured to shorten a temperature measurement interval as the maximum expected temperature gradient increases.

In Example 82, the subject matter of Example 81 may include the thermal management component further configured to lengthen a temperature measurement interval as the maximum expected temperature gradient decreases.

In Example 83, the subject matter of Examples 81-82 may include the processor further configured to activate temperature sensors of the device based on the determined characteristic.

In Example 84, the subject matter of Example 83 may include wherein the higher the determined characteristic, the more temperature sensors are activated.

In Example 85, the subject matter of Examples 47-84 may include wherein the pre-determined post-production measurement range is a leakage power range.

In Example 86, the subject matter of Example 85 may include wherein the determined characteristic of the chip is a leakage power measurement.

In Example 87, the subject matter of Examples 47-84 may include wherein the pre-determined post-production measurement range is a transistor speed range.

In Example 88, the subject matter of Example 87 may include wherein the determined characteristic of the chip is a transistor speed.

In Example 89, the subject matter of Examples 47-88 may include wherein the plurality of classes covers at least substantially all of a production process window from which the chip was produced.

In Example 90, a device, having a plurality of built-in chips, the device adapted for thermal management comprising a processor with a thermal management component configured to allocate resources from a thermal budget to one or more of the plurality of built-in chips based on the method described in any one of Examples 1-45.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that exemplary implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

While the invention has been particularly shown and described with reference to specific aspects, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

**Claims**

1. A device, having a built-in chip, adapted for thermal management, the device comprising:

   a storage element configured to store a thermal information comprising a plurality of classes corresponding to the chip, wherein each of the plurality of classes comprises a predetermined post-production measurement range and one or more predetermined thermal parameters associated with the predetermined post-production measurement range;
   a processor operatively coupled to the storage element and configured to:

   determine a characteristic of the chip;
   classify the chip into a respective class from the plurality of classes based on the determined characteristic of the chip;
   determine one or more predetermined thermal parameters from the respective class; and
   configure a thermal management component in the device according to the one or more determined predetermined thermal parameters.

2. The device of claim 1, wherein the processor is configured to implement one or more stages of bandwidth throttling.

3. The device of any one of claims 1-2, wherein one of the one or more predetermined thermal parameters is a first throttling temperature, the processor further configured to trigger a first stage of bandwidth throttling at the first throttling temperature.

**4.** The device of claim 3, wherein one of the one or more predetermined thermal parameters is a second throttling temperature, the processor further configured to trigger a second stage of bandwidth throttling at the second throttling temperature, wherein the second throttling temperature is higher than the first throttling temperature and wherein the second stage throttles data at a higher rate than the first stage.

**5.** The device of any one of claims 1-4, the processor further configured to perform a temperature prediction to determine a device temperature based on the determined characteristic and an amount of processing scheduled to be executed at the chip.

**6.** The device of claim 5, the processor further configured to coordinate the temperature prediction and the bandwidth throttling, wherein the temperature prediction provides the bandwidth throttling with the device temperature.

**7.** The device of any one of claims 1-6, the processor further configured to schedule at least one of a data burst or a throttle cycle based on the one or more of the predetermined thermal parameters of the respective class.

**8.** The device of any one of claims 1-7, wherein one of the one or more predetermined thermal parameters is a thermal runaway temperature.

**9.** The device of claim 8, the processor further configured to implement a shutdown mechanism using the thermal runaway temperature.

**10.** The device of any one of claims 1-9, wherein one of the one or more predetermined thermal parameters is a maximum expected temperature gradient, and wherein the thermal management component comprises a frequency corrector configured to calibrate a cellular frequency correction mechanism using the maximum expected temperature gradient.

**11.** A method for configuring a thermal management component of a device having a chip installed in the device, the method comprising:

   installing a thermal information comprising a plurality of classes into the device, wherein each of the plurality of classes comprises a predetermined post-production measurement range and one or more predetermined thermal parameters associated with the predetermined post-production measurement range;
   determining a characteristic of the chip;
   classifying the chip into a respective class from the plurality of classes based on the determined characteristic of the chip;
   determining one or more predetermined thermal parameters from the respective class; and
   configuring a thermal management component of the device according to the one or more determined predetermined thermal parameters.

**12.** The method of claim 11, further comprising storing the determined characteristic in a register on the chip.

**13.** The method of claim 12, further comprising the device reading the stored determined characteristic from the register on the chip.

**14.** The method of any one of claims 11-13, wherein the thermal management component comprises a throttling component configured to implement one or more stages of bandwidth throttling.

**15.** A machine readable storage including machine-readable instructions, when executed, to implement a method as claimed in any one of claims 11-14.


**Amended claims in accordance with Rule 137(2) EPC.**

**1.** A device, having a built-in chip, adapted for thermal management, the device comprising:

   a storage element configured to store a thermal information comprising a plurality of leakage power classes corresponding to the chip, wherein each of the plurality of leakage power classes comprises a predetermined post-production measurement range and one or more predetermined thermal parameters associated with the predetermined post-production measurement range and

wherein each leakage power class's respective parameters include throttling enable/disable levels and/or safety shutdown levels and/or thermal runaway trip point and/or maximum temperature gradient levels;

a processor operatively coupled to the storage element and configured to:

determine a characteristic of the chip;

classify the chip into a respective class from the plurality of leakage power classes based on the determined characteristic of the chip;

determine one or more predetermined thermal parameters from the respective class; and

configure a thermal management component in the device according to the one or more determined predetermined thermal parameters.

2. The device of claim 1, wherein the processor is configured to implement one or more stages of bandwidth throttling.

3. The device of any one of claims 1-2, wherein one of the one or more predetermined thermal parameters is a first throttling temperature, the processor further configured to trigger a first stage of bandwidth throttling at the first throttling temperature.

4. The device of claim 3, wherein one of the one or more predetermined thermal parameters is a second throttling temperature, the processor further configured to trigger a second stage of bandwidth throttling at the second throttling temperature, wherein the second throttling temperature is higher than the first throttling temperature and wherein the second stage throttles data at a higher rate than the first stage.

5. The device of any one of claims 1-4, the processor further configured to perform a temperature prediction to determine a device temperature based on the determined characteristic and an amount of processing scheduled to be executed at the chip.

6. The device of claim 5, the processor further configured to coordinate the temperature prediction and the bandwidth throttling, wherein the temperature prediction provides the bandwidth throttling with the device temperature.

7. The device of any one of claims 1-6, the processor further configured to schedule at least one of a data burst or a throttle cycle based on the one or more of the predetermined thermal parameters of the respective class.

8. The device of any one of claims 1-7, wherein one of the one or more predetermined thermal parameters is a thermal runaway temperature.

9. The device of claim 8, the processor further configured to implement a shutdown mechanism using the thermal runaway temperature.

10. The device of any one of claims 1-9, wherein one of the one or more predetermined thermal parameters is a maximum expected temperature gradient, and wherein the thermal management component comprises a frequency corrector configured to calibrate a cellular frequency correction mechanism using the maximum expected temperature gradient.

11. A method for configuring a thermal management component of a device having a chip installed in the device, the method comprising:

installing a thermal information comprising a plurality of leakage power classes into the device, wherein each of the plurality of leakage power classes comprises a predetermined post-production measurement range and one or more predetermined thermal parameters associated with the predetermined post-production measurement range and

wherein each leakage power class's respective parameters include throttling enable/disable levels and/or safety shutdown levels and/or thermal runaway trip point and/or maximum temperature gradient levels;

determining a characteristic of the chip;

classifying the chip into a respective class from the plurality of leakage power classes based on the determined characteristic of the chip;

determining one or more predetermined thermal parameters from the respective class; and

configuring a thermal management component of the device according to the one or more determined predetermined thermal parameters.

12. The method of claim 11, further comprising storing the determined characteristic in a register on the chip.

13. The method of claim 12, further comprising the device reading the stored determined characteristic from the register on the chip.

14. The method of any one of claims 11-13, wherein the thermal management component comprises a throttling component configured to implement one or more stages of bandwidth throttling.

15. A machine readable storage including machine-readable instructions, when executed, to implement a method as claimed in any one of claims 11-14.

# FIG. 1

## FIG. 2

200

# FIG. 3

300

310

Leakage power in mW

Run post silicon measurement
on process spread per device
(IDDQ, IDV, SpeedMon etc.)

Learn/train each profile for:
- Throttling enable/disable levels
- Safety shutdown levels
- Thermal run away trip point
- Max temperature gradient

SAVE
Each temperature profile
in device memory (LUT)

Save measurement in
device fuse registers

Read fuse reg
**Load thermal
profile**
Config throttle
params
Config AFC

FIG. 4

## FIG. 5

500

**Thermal-Run-Away**

Leakage Power [mW] @ room temp

250
200
150
100
50
0

80   85   90   95   100   105   110

Thermal-Run-Away mapped to Junction Temperature [°C]

## FIG. 6

600

$\Delta T_{max, gradient}$

$C_1$  $C_2$  $C_3$  $C_4$  $C_5$  $C_6$  $\bullet\bullet\bullet$  $C_n$   $C_{Leak}$

# FIG. 7

700

706

702

704    708    710
Controller

712
Data Source

TX    TX

714
Memory

RX    RX

MEM

716
Data sink

718
Sensors

# FIG. 8

800

FIG. 9

# FIG. 10

1010 — Throttler

1000

1050 — Frequency Corrector

1020 — Temperature Predictor

1030 — Shutdown Component

# FIG. 11

Installing a thermal information comprising a plurality of classes into the device, wherein each of the plurality of classes comprises a pre-determined post-production measurement range and one or more pre-determined thermal parameters associated with the pre-determined post-production measurement range — 1100

Determining a characteristic of the chip — 1102

Classifying the chip into a respective class from the plurality of classes based on the determined characteristic of the chip — 1104

Determining one or more pre-determined thermal parameters from the respective class — 1106

Configuring a thermal management component of the device according to at least one thermal parameter of the respective class — 1108

# FIG. 12

Europäisches
Patentamt

European
Patent Office

Office européen
des brevets

# EUROPEAN SEARCH REPORT

**Application Number**

EP 16 20 7548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/046999 A1 (JUNG HWISUNG [US]) 21 February 2013 (2013-02-21) * abstract * * figures 1-3 * * paragraph [0006] - paragraph [0008] * * paragraph [0022] - paragraph [0027] * * paragraph [0030] - paragraph [0033] * * claims 11-18 * | 1-15 | INV. G06F1/20 G06F1/32 |
| X A | US 2007/045825 A1 (CHAN NANCY [CA] ET AL) 1 March 2007 (2007-03-01) * abstract * * paragraph [0020] - paragraph [0024] * * paragraph [0028] * * paragraph [0033] - paragraph [0036] * * figures 1-4,9,10 * | 1,11 2-10, 12-15 | |
| X A | US 2005/218871 A1 (KANG INYUP [US] ET AL) 6 October 2005 (2005-10-06) * abstract * * paragraph [0014] * * paragraph [0037] - paragraph [0038] * * paragraph [0044] - paragraph [0046] * * paragraph [0048] - paragraph [0054] * * paragraph [0059] - paragraph [0062] * * paragraph [0077] * * figures 1-4,9-11 * | 1,11 2-10, 12-15 | TECHNICAL FIELDS SEARCHED (IPC) G06F H04W |
| A | US 2013/047012 A1 (JUNG HWISUNG [US]) 21 February 2013 (2013-02-21) * abstract * * paragraph [0017] * * paragraph [0022] * * paragraph [0029] * | 1-15 | |

The present search report has been drawn up for all claims

| Place of search | Date of completion of the search | Examiner |
|---|---|---|
| Munich | 7 July 2017 | Alonso Nogueiro, L |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 7548

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2017

| Patent document cited in search report | | Publication date | Patent family member(s) | | Publication date |
|---|---|---|---|---|---|
| US 2013046999 | A1 | 21-02-2013 | EP | 2560073 A1 | 20-02-2013 |
| | | | KR | 20130020624 A | 27-02-2013 |
| | | | US | 2013046999 A1 | 21-02-2013 |
| | | | US | 2015113303 A1 | 23-04-2015 |
| US 2007045825 | A1 | 01-03-2007 | NONE | | |
| US 2005218871 | A1 | 06-10-2005 | NONE | | |
| US 2013047012 | A1 | 21-02-2013 | US | 2013043914 A1 | 21-02-2013 |
| | | | US | 2013043916 A1 | 21-02-2013 |
| | | | US | 2013043927 A1 | 21-02-2013 |
| | | | US | 2013043939 A1 | 21-02-2013 |
| | | | US | 2013044844 A1 | 21-02-2013 |
| | | | US | 2013045779 A1 | 21-02-2013 |
| | | | US | 2013046915 A1 | 21-02-2013 |
| | | | US | 2013046967 A1 | 21-02-2013 |
| | | | US | 2013047000 A1 | 21-02-2013 |
| | | | US | 2013047012 A1 | 21-02-2013 |
| | | | US | 2013047023 A1 | 21-02-2013 |
| | | | US | 2013047166 A1 | 21-02-2013 |
| | | | US | 2013047250 A1 | 21-02-2013 |
| | | | US | 2013047272 A1 | 21-02-2013 |
| | | | US | 2014028344 A1 | 30-01-2014 |
| | | | US | 2014312947 A1 | 23-10-2014 |
| | | | US | 2016226498 A1 | 04-08-2016 |
| | | | WO | 2013026032 A1 | 21-02-2013 |
| | | | WO | 2013026039 A2 | 21-02-2013 |
| | | | WO | 2013026040 A1 | 21-02-2013 |

EPO FORM P0459

For more details about this annex : see Official Journal of the European Patent Office, No. 12/82